(19) Europäisches Patentamt
European Patent Office
Office européen des brevets

(11) Publication number: 0 369 527 A2

(12) EUROPEAN PATENT APPLICATION

(21) Application number: 89202830.9

(51) Int. Cl.5: C08G 59/40, C08G 73/12

(22) Date of filing: 07.11.89

(30) Priority: 14.11.88 US 271132
14.11.88 US 271133
02.12.88 US 279383
15.02.89 US 310127
21.02.89 US 312839

(43) Date of publication of application:
23.05.90 Bulletin 90/21

(84) Designated Contracting States:
BE CH DE ES FR GB IT LI NL SE

(71) Applicant: SHELL INTERNATIONALE
RESEARCH MAATSCHAPPIJ B.V.
Carel van Bylandtlaan 30
NL-2596 HR Den Haag(NL)

(72) Inventor: Pigneri, Anthony Michael
7910 Edgemoor Drive
Houston Texas 77036(US)
Inventor: Stewart, Thomas Groves, Jr.
8914 Carvel Lane
Houston Texas 77036(US)
Inventor: Jackson, Roy Joseph
2323 Briar Lee Drive
Houston Texas 77077(US)
Inventor: Vick, James, III

deceased(US)

(74) Representative: Aalbers, Onno et al
P.O. Box 302
NL-2501 CH The Hague(NL)

(54) **Curable resin compositions.**

(57) A curable resin composition comprising a compound (a) selected from:

(a1) an epoxy compound

(a2) a maleimide monomer, a prepolymer thereof or a prepolymer of the maleimide monomer and an amine and

(a3) a cyanate aromatic ester monomer a prepolymer thereof or prepolymers of the ester monomer and an amine, and

(b) a propargyl aromatic ether monomer.

EP 0 369 527 A2

# CURABLE RESIN COMPOSITIONS

The invention relates to new curable resin compositions comprising a propargyl ether- or a propargylether-cyanate ester compound and processes for the preparation of said propargyl ether-or propargyl ether-cyanate ester compounds.

Thermoset resins based on propargyl ether aromatic compounds are known from e.g. US patent No. 4,226,800. Because polymerization of these resins does not involve the creation of polar groups they should be prime candidates for application requiring low dielectric constant and low moisture uptake. Based upon polymers of similar structure they may also be expected to have outstanding high temperature properties.

Novel compositions comprising a propargyl aromatic ether compound have now been found which are very suitable for use as composites and are thermally stable and curable even without a catalyst.

Therefore the present invention is directed to curable resin compositions comprising a compound (a) selected from:

(a1) an epoxy compound,

(a2) a maleimide monomer, a prepolymer thereof or a prepolymer of the maleimide monomer and an amine and

(a3) a cyanate aromatic ester monomer a prepolymer thereof or prepolymers of the ester monomer and an amine, and

(b) a propargyl aromatic ether monomer.

The cured compositions of the invention show excellent adhesive force, bond strenght, heat resistance and electrical properties but also are excellent in mechanical properties and resistance to impact, chemicals and moisture.

Suitable epoxy compounds (a1) include any curable epoxy resin having on average more than one vicinal epoxy group per molecule. The epoxy resin can be saturated or unsaturated, aliphatic, cycloaliphatic, aromatic, heterocyclic and can bear substituents which do not interfere with the curing reaction. In view of adhesion properties, the epoxy compounds preferably have an epoxy equivalent weight of from 70 to 6000, more preferably of from 170 to 4000. A type of suitable epoxy compounds are bisepoxy compounds of the following general formula (1):

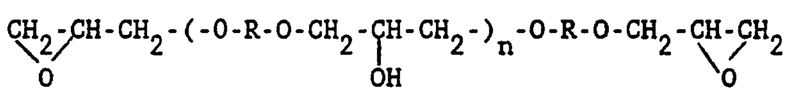

(1)

wherein n is zero or a positive number, preferably 0 to 12 and R is an aromatic group of formula (2):

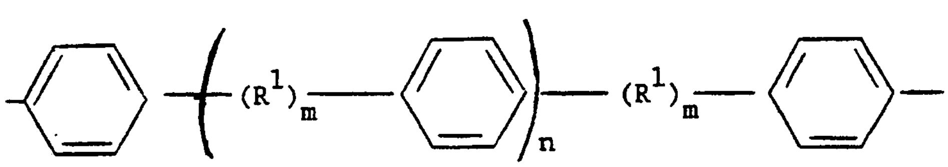

(2)

wherein each m is independently zero or 1; n is zero or 1; and each $R^1$ is independently a divalent aliphatic or aromatic (aryl) hydrocarbon or aromatic ether group containing up to 14 carbon atoms, an oxygen atom, a sulfur atom, a carbonyl group, a sulfonyl group, a sulfinyl group, an alkyleneoxyalkylene group containing up to 4 carbon atoms in each alkylene group, an imino group,

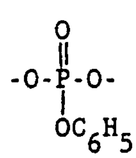

or

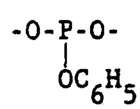

or a group derived from novolac-type phenol or resorcinol resins.

These epoxy compounds, especially bisepoxy compounds, are prepared by reacting polyhydric

phenols with epihalohydrins such as epichlorohydrin in the presence of a base such as an alkali hydroxide. Instead of reacting polyhydric phenols with epihalohydrins, di- or polyamines (diamines being preferred) can be reacted with epihalohydrin to form bisepoxy compounds. The diamines are preferably aromatic diamines in view of the thermal stability of the final resins. When it is desired to improve the flexibility or suppleness of the resin, alicyclic diamines can be used alone or in combination with the aromatic diamines. From the viewpoint of reactivity, the diamines are preferably primary diamines, but secondary diamines can also be used. The diamines are preferably aromatic diamines in view of the thermal stability of the final resins. Examples of the diamines that can be used in this invention include diamines of the general formula (3)

$H_2N - R^2 - NH_2$     (3)

wherein $R^2$ is a divalent aromatic or alicyclic organic group containing up to about 24 carbon atoms. Examples of suitable diamines are m-phenylene diamine, m-, or p-xylylenediamine, 1,4-cyclohexane diamine, hexahydroxylylene diamine, 4,4'-bisaminophenyl methane, 4,4'-bisaminophenyl sulfone, bis(4-amino-3-methyl-phenyl)methane (MDT), bis(4-amino-3,5-dimethylphenyl)methane (MDX), 4,4'bisaminophenylcyclohexane, 4,4'-bisaminophenyl ether, 2,2-bis-(4'-aminophenyl)propane, 2,2-bis(4-amino-3-methylphenyl)methane, and α,α-bis(4-aminophenyl)phenylmethane, and α,α'-bis(4-aminophenyl) p-diisopropenylbenzene.

Polyamines suitable for use in the invention include hexamethyl tetramine, polyethylene amine, polyamino styrene or polyvinyl imidazole; triethylene diamine; imidazoles such as 2-methylimidazole, 2-undecylimidazole, 2-heptadecylimidazole, 2-phenylimidazole, 2-ethyl-4-methylimidazole, 1-benzyl-2-methylimidazole, 1-propyl-2-methylimidazole, 1-cyanoethyl-2-methylimidazole, 1-cyanoethyl-2-ethyl-4methylimidazole, 1-cyanoethyl-2-undecylimidazole, 1-cyanoethyl-2-phenylimidazole or 1-guanaminoethyl-2-methylimidazole, and adducts formed between these imidazoles and trimellitic acid.

Examples of epoxy compounds readily available and suitable for use in this invention are those derived from 2,2-bis(4-hydroxyphenyl)propane (bisphenol A), or a chlorine- or bromine-substituted derivative of bisphenol A and epihalohydrins, or epoxy compounds derived from a precondensate of phenol and formaldehyde and epihalohydrins.

Suitable epoxy compounds as described above are disclosed in U.S. patent 4,110,364.

For example, epoxy resins include glycidyl ethers prepared by the reaction of epichlorohydrin with a compound containing at least one hydroxyl group carried out under alkaline reaction conditions. The epoxy resin products obtained when the hydroxyl group-containing compound is bisphenol A are represented by formula 4 below:

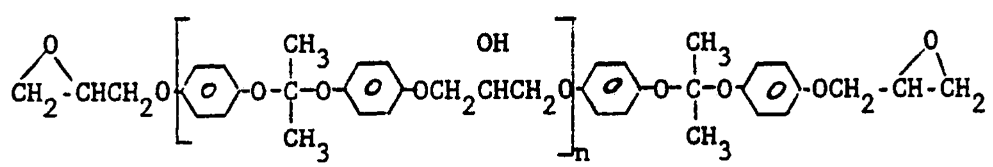

(4)

wherein n is zero or a number greater than 0, commonly in the range of 0 to 10, preferably in the range of 0 to 2. Other suitable epoxy resins can be prepared by the reaction of epichlorohydrin with mononuclear di- and trihydroxy phenolic compounds such as resorcinol and phloroglucinol, selected polynuclear polyhydroxy phenolic compounds such as bis(p-hydroxyphenyl)methane and 4,4'-dihydroxybiphenyl, or aliphatic polyols such as 1,4-butanediol and glycerol.

Suitable epoxy resins (a1) have molecular weights generally within the range of from 100 to 10,000, preferably of from 200 to 1500. The commercially available liquid epoxy resin EPON Resin 828 (EPON is a registered trade mark), a reaction product of epichlorohydrin and bisphenol A having a molecular weight of about 400, an epoxide equivalent weight (EEW) (ASTM D-1652) of about 185-192, and an n value in the formula above of about 0.2, is presently the preferred epoxy resin because of its low viscosity and commercial availability.

Other suitable epoxy resins known in the art include the reaction products of an allyl halide with a phenol and peroxide or fusion epoxies which include the reaction product in the absence of a solvent of a carboxylic acid or anhydride or a phenol with a compound containing at one vic-epoxy group including those disclosed in U.S. patents 4,634,757 and 4,528,356.

Preferably, compound (a1) is a halogenated, preferably brominated, epoxy resin. The brominated epoxy resin is a reaction product of a halogenated polyhydric phenol with epichlorohydrin having an EEW within the range of from 450 to 1200, preferably of from 450 to 650. Preferably, the brominated epoxy resin will have a halogen content within the range of from 10 to 50 percent, most preferably of from 15 to 40 percent.

The halogenated epoxy resin will generally be employed in such a manner as to provide a cured composition having a flame retardance rating of at least UL 94 V-1, preferably V-0. The halogenated phenol is preferably tetrabromobisphenol A because of the high degree of flame retardance imparted by the resulting epoxy resin. The halogenated epoxy resin is present in the composition in an amount within the range of from 10 to 90 weight percent, preferably of from 60 to 85 weight percent, based on the weight of the composition. A suitable brominated epoxy is available commercially as M&T THERMOGUARD 210 (THERMOGUARD is a registered trade mark), a reaction product of tetrabromobisphenol-A and epichlorohydrin having a EEW of from 500-600 and especially EPON Resin 1123, a brominated bisphenol A epoxy resin.

Suitable maleimide compounds (a2) are conventional organic compounds known in the art and include those compounds having two or more maleimide groups derived from maleic anhydride and diamines or polyamines.

Suitable maleimides are represented by the following general formula (5)

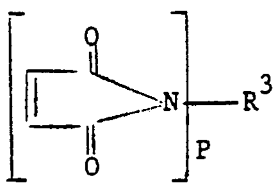

(5)

wherein P is 2 to 4 and $R^3$ is a divalent aromatic (aryl), aliphatic or alicyclic organic group containing about 1 to 50 carbon atoms. Suitable bismaleimides are represented by the formula (6)

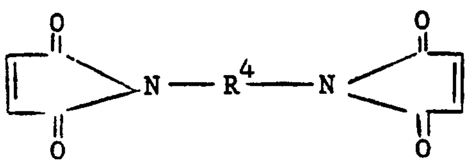

(6)

wherein $R^4$ is a divalent aromatic (aryl), aliphatic or alicyclic organic group containing about 2 to about 40 carbon atoms.

Examples of the divalent organic groups $R^3$ and $R^4$ in the formulae 5 or 6 include (i) aromatic, aliphatic or alicyclic hydrocarbon groups containing about 3 to about 20 and, preferably, 6 to 16 carbon atoms, such as isopropylidene, phenylene, naphthylene, xylene, cyclohexylene or hexahydroxylene, and (ii) orgnaic groups consisting of a plurality of aromatic rings bonded to each other directly or through a bridging atom or group, as expressed by the previous formula (2).

In formulae 5 or 6, the divalent organic groups $R^3$ or $R^4$ can contain an organic group which does not participate in the reaction, such as an alkyl group containing 1 to 4 carbon atoms (e.g. methoxy or ethoxy), at the aromatic ring when it is an aromatic organic group or at the alicyclic ring when it is an alicyclic organic group. Preferably, the maleimide is bismaleimide of methylene dianiline.

The maleimide can be prepared by a method known per se which comprises reacting maleic anhydride with diamines or polyamines containing up to about 24 carbon atoms, and then cyclodehydrating the resulting maleamide acids. The diamines and polyamines are preferably aromatic diamines in view of the thermal stability of the final resins. When it is desired to improve the flexibility or suppleness of the resin, alicyclic diamines or polyamines can be used alone or in combination with the aromatic diamines or polyamines. From the viewpoint of reactivity, the diamines are preferably, and especially primary diamines, but secondary diamines or polyamines can also be used.

Examples of suitable diamines or polyamines are any of the compounds mentioned before. The maleimide can be used either alone or in admixture of two or more. Prepolymers of the maleimides and preferably prepolymers of the maleimides and amines can also be used as component (a2). Any of the di- or polyamines mentioned before can be incorporated in the form of a prepolymer of the maleimide and the amine.

When the maleimide is used in the form of a prepolymer with an amine, the prepolymer can be produced by reacting the maleimide and the amine, especially 1 mol of the maleimide and 0.5 to 1.0 mol of the diamine, in a suitable solvent such as ketones under the known conditions, for example, by heating at a temperature of about 40° to 250 °C for 4 minutes to 5 hours. The prepolymer derived from the maleimide

and the diamine, although differing according to the ratio of the monomers or the degree of polyaddition, are considered to have the structure represented by the following formula (7)

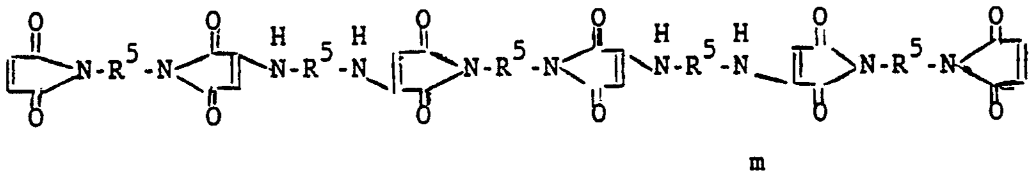 (7)

wherein m is zero or a positive number, generally not more than 10, and $R^6$ is the same as $R^3$ as defined hereabove.

In the case of adding amines in the form of prepolymers, free amines may be present in the compositions.

When the amines are included in component (a2) in the form of a prepolymer, they are considered to function mainly as a modifier for the polymer, such as a chain extender.

Suitable maleimides are disclosed in U.S. Patent No. 4,110,364 and 4,298,720.

Suitable cyanate aromatic ester compounds (a3) are compounds having at least two cyanate groups, directly attached to ring carbon atoms of an aromatic (aryl) organic group containing 6 to about 100 carbon atoms. Suitable dicyanate aromatic ester monomers include those represented by the formula (8)

$R^6$-(-O - C ≡ N)$_n$ (8)

wherein n is a number of at least 2, and usually not more than about 10, preferably about 5, and $R^6$ is an aromatic (aryl) organic group containing up to about 100 carbon atoms, comprising an aromatic ring or an aromatic ring (a) bonded directly or through a bridging atom or group to or (b) fused to one or more aromatic or cycloaliphatic rings, each aromatic ring of R having from zero to all the available ring positions independently substituted by the cyanate ester group.

Suitable aromatic organic groups for $R^6$ include

(i) residues having a valence of at least 2 and derived from aromatic hydrocarbons containing 6 to 16 carbon atoms, such as benzene, naphthalene, anthracene or pyrene;

(ii) organic groups consisting of a plurality of aromatic rings bonded directly or through a bridging atom or group, for example, those expressed by previous formula (2).

The aromatic organic groups $R^6$ and $R^1$ can be substituted on their aromatic ring by a substituent which does not participate in the reaction, such as an alkyl group containing 1 to 4 carbon atoms (e.g. methyl or ethoxy), alkoxy groups containing 1 to 4 carbon atoms (e.g. methoxy or ethoxy), a halogen atom (e.g. chlorine or bromine), or a nitro group.

Examples of suitable organic groups of the general formula (2) are those derived from biphenyl, diphenylmethane, $\alpha,\alpha^1$ -dimethyl-phenylmethane, di-(4-hydroxyphenyl)-p-diisopropylbenzene, diphenyl ether, diphenyl dimethylene ether, diphenyl ketone, diphenyl thioether, diphenylamine, diphenyl sulfoxide, diphenyl sulfone, triphenyl phosphite, and triphenyl phosphate.

In the compounds of formula 8, $R^6$ preferably contains up to carbon atoms when a novolac resin or up to 40 carbon atoms when other than a novolac resin.

Generally, the cyanate aromatic ester monomers can be prepared by known methods including reacting polyhydric phenolic materials with cyanogen halides. Cyanate aromatic esters, which are readily available and preferred in this invention in view of the properties of the final resin obtained, are those prepared by reacting a dihydric phenol, such as bisphenol A with cyanogen halides. Likewise, cyanate aromatic esters obtained by the reaction of a phenol-formaldehyde precondensate with cyanogen halides can be advantageously used.

The cyanate aromatic ester (a3) can also be used in the form of a prepolymer. The prepolymer is prepared by polymerizing the cyanate aromatic ester monomer in the presence of catalyst, for example, a mineral acid, a Lewis acid, a salt such a sodium carbonate or lithium chloride, or a phosphoric acid ester such as tributyl phosphine. The prepolymer contains a triazine ring generally in the molecule as a result of the trimerization of the cyano group of the cyanate aromatic ester. Preferred prepolymers are those having an average molecular weight of at least 400, especially up to 6000.

The cyanate aromatic ester can be used in the form of a mixture of the monomer and the prepolymer. For example, many of the commerically available cyanate aromatic esters derived from bisphenol A and a cyanogen halide are in the form of mixtures of cyanate monomers and prepolymers, and such materials can also be used in the present invention.

Suitable components (a3) also include

- a mixture of prepolymers of the cyanate monomer and an amine,
- an admixture of two or more of the cyanate aromatic esters, or
- prepolymers of the cyanate aromatic ester and prepolymers of the cyanate aromatic ester and amines.

As already stated, an amine can be incorporated in the form of a prepolymer of the cyanate aromatic ester and the amine as component (a3). Examples of the amines that can be used in this invention include any of the diamines and polyamines mentioned before.

When the amines are incorporated in the composition in the form of prepolymers with the cyanate aromatic ester, the prepolymers can be produced by reacting the cyanate aromatic ester monomer with diamine, preferably using 0.1 to 1.0 equivalent of the diamine based on the cyanate aromatic ester monomer, in a suitable solvent such as ketones at a temperature of about 0° to 100 °C for 1 minute to 1 hour.

In the case of adding amine in the form of prepolymers, free amine may be present in the composition.

Again when the amine is included in component (a3) in the form of a prepolymer, they are considered to function mainly as a modifier for polymer suoh as a chain extender.

Suitable cyanate aromatic ester components (a3) are disclosed in U.S. Patent No. 4,110,364.

The propargyl aromatic ethers useful as component (b) in the present invention are compounds having at least two propargyl ether groups directly attached to an aromatic (aryl) organic group. Suitable di- and poly propargyl aromatic ester monomers include those represented by the formula (9)

$R^7{-}(OCH_2\text{-}C \equiv CH)_n$ (9)

wherein n is a number of at least from 2 to about 10, $R^7$ is an aromatic (aryl) organic group similar to R as presented above, whereas each aromatic ring of $R^7$ has from one to all the available ring positions independently substituted by propargyl ether groups.

Generally, the propargyl aromatic ether monomers can be prepared by known methods including reacting a di- or polyhydric phenolic material with a propargyl halide, such as chloride or bromide, in an aqueous alkaline solution, such as aqueous sodium hydroxide solution as described in U.S. Patent 4,226,800.

However said US patent describes a process to prepare such propargyl ethers using propargyl bromide in the presence of an aqueous sodium hydroxide solution. Propargyl bromide is shock sensitive and is sometimes handled as a solution in toluene. The examples show variable results in respect of the percentage yield of propargyl ether product. Thus indicating that it is not practical to prepare propargyl ethers from propargyl bromide in a safe efficient and simple manner.

In view of the above it therefore is desirable to have a process of preparing propargyl ethers of polyhydric compounds which circumvents the use of shock sensitive propargyl bromide or solutions thereof in aromatic solvents.

The invention therefore is also directed to a process for the preparation of a propargyl ether aromatic monomer (b) which comprises treating a polyhydric phenolic compound with propargyl chloride in the presence of an alkali metal hydroxide or carbonate and a reaction medium comprising a water miscible, protic solvent or a mixture thereof with water.

The present process is useful to prepare propargyl ethers in a safe, efficient and simple manner which results in a consistently high yield of the desired propargyl ether usually as a crystalline product that does not require subjection to heat in purification because subsequent purification is not usually required.

The propargyl aromatic ethers prepared by the process of the present invention are compounds having at least two propargyl ether groups directly attached to an aromatic (aryl) organic group. Suitable propargyl aromatic ether monomers include any of those represented by the previous formula (9).

The amount of water miscible, protic solvent is not critioal and can vary. The reaction is usually conducted using an amount of protic solvent that yields a weight ratio of propargyl ether product to protic solvent plus propargyl ether product of about 0.3.

Suitable water miscible, protic solvents include any solvents that will not interfere with the reaction including mono- or polyhydric alcohols containing from 1 to 8 carbon atoms and alkyl ethers thereof, including methanol, ethanol, isopropanol, isobutanol, propylene glycol, propylene glycol monomethyl or monoethyl ether and 1,2-propandiol. Preferably, the water miscible solvent is a monohydric alcohol containing from 1 to 3 carbon atoms, especially isopropanol. The use of the protic solvent reaction medium usually results in a more homogeneous reaction mixture because the reaction medium brings the phenate salt intermediate into solution. The chloride salt by-product is soluble in water but is not very soluble in the organic protic solvent.

The alkali metal hydroxide or carbonate used in the present invention includes those of sodium, potassium and the like. The use of sodium hydroxide is preferred. The amount of alkali metal hydroxide or carbonate can vary but is at least an amount equimolar to the total number of free hydroxyl groups in the

polyhydric phenolic starting compound. An excess of alkali metal hydroxide or carbonate is preferred, such as an amount of from 1.01 molar to 2.0 molar, and preferably of from 1.04 molar to 1.10 molar based on the total number of free hydroxyl groups in the starting compound. The alkali metal hydroxide or carbonate is usually used as a dilute aqueous solution although the use of non-aqueous forms is, of course, not excluded.

The amount of water when present in the reaction medium can vary. The reaction is usually improved when the amount of water is increased relative to the organic phase as this is believed to aid in solubilizing the intermediate phenolate salt of the polyhydric phenolic starting compound. Preferably, the water content enough to give about a 2-15% weight concentration of alkali metal hydroxide or carbonate in water at the beginning of the reaction and is preferably of from 2 molar to 12 molar on the total moles in the organic phase of the reaction.

The pH of the reaction is not critical and can vary. The reaction is usually conducted at a pH of 7 or higher, preferably above pH 11 and especially above pH 12. It is usually desirable to maintain the pH of the reaction mixture at 12 or above until the reaction is substantially complete.

The amount of propargyl chloride can vary, but is at least an amount equimolar to the total number of free hydroxyl groups in the polyhydric phenol starting compound. An excess of propargyl chloride is preferred, such as an amount of from 1.1. molar to 10 molar, and preferably of from 1.5 molar to 3.0 molar and can vary based on the molar number of free hydroxyl groups in the polyhydric phenolic starting compound.

The products are recovered and purified as needed by conventional techniques known in the art for recovering ethers, including distillation, solvent extraction and crystallization. Usually, the products are obtained directly as crystalline products. The precipitation (crystallization) during the reaction serves to drive the reaction further to completion. After the reaction is complete (as monitored by high performance liquid chromatography), the reaction mass is cooled to room temperature, where more product propargyl ether crystallizes out of solution.

The product propargyl ether is washed twice with solvent, e.g. isopropyl alcohol (IPA), to remove propargyl chloride and then washed several times with water (until pH of source water, usually 6-6.5, equals pH of wash water). Product crystals are then dried. This wash procedure may be reversed.

The propargyl ether products of the process of the invention are useful in the preparation of polymers, including those described in U.S. patents 3,300,456, 3,594,175 and 4,226,800.

The invention further relates to propargyl aromatic monomers (b) having at least one cyanate ester group and at least one propargyl ether group, each independently directly attached to ring carbon atoms of an aromatic (aryl) organic group which contains of from 6 to 100 carbon atoms. Such cyanate ester-propargyl ether aromatic compounds include those represented by Formula 10

$$\begin{array}{l} (OC \equiv N)_m \\ \quad | \\ R^8 \\ \quad | \\ (OCH_2 - C \equiv CH)_n \end{array} \qquad (10)$$

wherein m is a number of at least 1, n is a number of at least 1 and $R^8$ is an aromatic (aryl) organic group similar to $R^7$ as presented above, whereas each aromatic ring of $R^8$ has from one to all the available aromatic ring positions independently substituted by the cyanate ester or propargyl ether groups.

The presence of the cyanate ester group with the propargyl ether group in the aromatic compounds enables curing of the resins at temperatures below 200 °C. The resins resulting from these compounds of Formula 10 have a desirable combination of properties, such as low moisture sensitivity, low dielectric constant, and high temperature properties, e.g., high Tg, as opposed to propargyl ether polymers which have high temperature onset of polymerization making them impractical for processing into electrical laminates. Also, curing reactions involving these compounds can be controlled readily, in spite of exothermic heat generated, since the active cyanate groups polymerize at a lower temperature, thus building molecular weight prior to polymerization of the propargyl ether portion of the overall compound.

In the above compounds, there is a total of 1 or 2 cyanate ester and propargyl ether substituent groups on any aromatic ring.

The invention includes compounds having at least one cyanate ester group and at least one propargyl

ether group of the Formula 11:

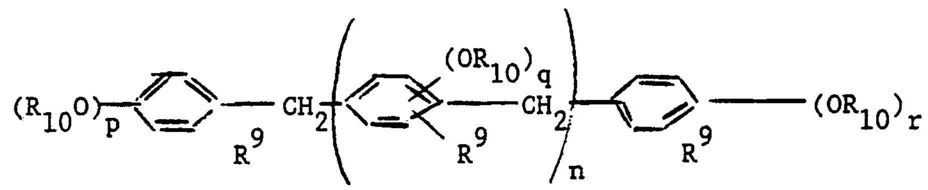 (11)

in which R is independently hydrogen or methyl, each $R_{10}$ is independently - $CH_2$ - C ≡ CH or - C ≡ N; q is 1 to 4; each p and r is independently 1 to 5; and n is about 1-10. Preferably p, q and r each independently is 1 or 2 and n is 6-8.

In the compounds of the invention, preferably in the phenolic starting material, e.g., HO-$R^8$ -OH wherein $R^8$ has the meaning described for Formula 10, $R^8$ contains up to about 70 carbon atoms when a novolac resin and up to about 40, preferably 24, carbon atoms when other than a novolac resin.

The cyanate ester-propargyl ether aromatic compounds of the invention can be prepared by treating the corresponding di or polyhydric phenolic starting material with less than an equivalent amount of a propargyl halide so that one or more of the hydroxy groups are not etherified and subsequently treating the resulting free hydroxy groups in the propargyl ether substituted product with a cyanogen halide. The reverse process or the conducting of the two steps essentially simultaneously can also be used.

Preferably, the phenolic starting material is treated with a propargyl halide, such as chloride or bromide in an aqueous alkalene solution, such as aqueous sodium hydroxide solution as described in U.S. patent 4,226,800. The preferred method is by using propargyl chloride in an aqueous sodium hydroxide and water and/or immiscible or water-miscible co-solvent as described above.

The free hydroxy groups in the propargyl ether substituted intermediate are treated with a cyanogen halide, such as cyanogen bromide or the like, which can be dissolved in a solvent, such as toluene. Alcohols such as isopropyi alcohol, ketones such as methyl isobutyl ketone, or the like can be used. A slight excess of cyano reactant is preferred.

The reaction is preferably carried out at low temperatures due to the volatility of the cyanogen bromide and the side reaction between cyanogen halide and base when the phenolic is not prereacted with the base. For example, the temperature is from -40 °C to 60 °C, preferably from -20 °C to 25 °C. The use of conventional inert liquid organic solvents is preferred, including aromatic hydrocarbons, such as benzene, toluene or xylene; ethers, such as diethyl ether or tetrahydrofuran; acetone; ketones, such as methyl ethyl ketone, methyl isobutyl ketone; or halogenated aliphatic or aromatic hydrocarbons, such as methylene chloride and chlorobenzene. Suitable processes for making cyanate esters are described in U.S. patents 3,553,244 and 3,595,900.

The reaction is conducted in the presence of a base including alkali metal hydroxides, such as sodium hydroxide or the like, and aliphatic amines, such as triethylamine. Cyanogen halide reacts with a free base, such as with triethylamine, to form diethyl cyanamide and ethyl bromide. The phenolic material can be prereacted with the base prior to addition to cyanogen halide.

When low temperatures are not used, prereaction of an amine with the phenolic material forms the phenolate salt. Prereaction with the phenolic material facilitates the reaction by not having free base available. The phenolate salt can then react with the cyanogen halide to form the cyanate ester product. Using the prereaction scheme, one can carry out the reaction at temperatures above room temperature and still achieve desirable conversion. The resulting amine hydrohalide salts are removed by filtration or the like.

The compound of Formula 10 is recovered by conventional techniques such as evaporation of the solvent, precipitation, solvent extraction depending on the properties of the product.

The invention also relates to curable resin compositions comprising an aromatic compound having at least one cyanate ester group and at least one propargyl ether group, each independently, directly attached to a ring carbon atom of the aromatic ring(s) of an aromatic (aryl) organic group which contains from about 6 to about 100 carbon atoms, or a prepolymer thereof or a prepolymer of the cyanate ester propargyl ethyl compound with an amine.

The mixed cyanate ester-propargyl ether functionality compounds of the invention give resins which undergo trimerization polymerization at temperatures used with conventional electrical laminate processing. These cured resins have good electrical properties, such as low dielectric constant, high glass transition temperature, low weight loss and are soluble in conventional varnish solvents. Prepregs are readily prepared and converted into laminates.

Such curable resin compositions comprising a cyanate ester-propargyl ether compound are useful in the preparation of various articles of manufacture. Thus, the invention also includes prepregs of the above composition as well as shaped articles, reinforced compositions, electrical laminates as hereinafter described from these cured or partially cured resin compositions.

Thus, the cyanate ester-propargyl ether aromatic compound of the present invention is particularly useful as a monomer, intermediate or prepolymer for the preparation of cyanurate polymers. Polymerization of the monomer is accomplished by heating the monomer to effect thermal polymerization.

The thermal polymerization of the monomer involves trimerization of any terminal cyanato groups to form a cyanurate that has a three-dimensional network structure followed by polymerization of the propargyl ether groups.

For example, $R^8$ is a divalent aromatic radical having about 2 to 15 aromatic nuclei which can be linked by ether oxygen, carboynyl, sulfur, sulfonyl or hydrocarbon bonding.

The polymerization of the cyanate ester-propargyl ether aromatic compounds of the invention can be carried out by polymerizing them in solution or in suspension, using as a solvent or suspension medium the common organic solvents such as hydrocarbons, alcohols, ketones, halogenated hydrocarbons, nitrated hydrocarbons, dimethylsulfoxide and dimethylformamide. The solvent can be removed by distillation or simple evaporation during the course of or at the end of the polymerization. The composition is suitable for fiber-reinforced composites applications, for which a fibrous reinforcing material, such as chopped glass, glass fibers, carbon fiber, and the like, in the form of a mat, cloth or continuous fibers, for example, is coated or impregnated with a solution of the cyanate ester-propargyl ether compound. The impregnated fibers are usually subjected to a relatively mild heat treatment ("B"-staged) to partially cure the resin to a flexible, tacky state, or "prepreg." The prepreg is then subjected to elevated temperature and pressure so as to completely cure the resin to a hard, inflexible state. A plurality of prepregs can be layered and cured to form a laminate having utility in circuit boards.

The compositions comprising a cyanate ester-propargyl ether compound are cured by heating after applying it to a substrate as a coating or adhesive layer, or after moulding or laminating in the form of powder, pellet or as impregnated in a substrate. The curing conditions of the curable composition of this invention depend on the proportion of components constituting the composition and the nature of the components employed. In general, the composition comprising a cyanate ester-propargyl ether compound may be cured by heating it at a temperature within the range of from 0 °C to 300 °C, preferably of from 100 °C to 250 °C, although differing according to the presence of a catalyst or curing agent or its amount, or the types of the components in the composition. The time required for heating is generally 30 seconds to 10 hours, although considerably differing according to whether the resin composition is used as a thin coating or as molded articles of relatively large thickness or as laminates or as matrix resins for fiber reinforced composites, particularly for electrical and electronic applications, e.g., when applied to an electrically non-conductive material, e.g., glass, and subsequently curing the composition. Suitable fibrous reinforcing materials include glass fibers, quartz fibers, carbon fibers, boron fibers, Kevlar fibers and Teflon fibers (polytetrafluoroethylene), with woven or continuous glass fibers or carbon fibers being preferred. The fibrous or reinforcing material is present in the composition in an amount effective to impart increased strength to the composition for the intended purpose, and can generally be of from 40 to 95 weight percent, usually of from 50 to 80 weight percent, based on the weight of the total composition. when the resin composition comprising a cyanate ester-propargyl ether compound is used for producing moulded articles, laminated articles or bonded structures, the curing is desirably effected under pressure. Generally, this pressure is from 10 to 100 $Kg/cm^2$ (gauge).

The composition comprising a cyanate ester-propargyl ether compound cures rapidly, even under mild conditions, so is especially suitable when quantity production and ease of workability are desired. The cured resin made from these compositions not only has excellent adhesive force, bond strength, heat resistance, and electric properties, but also is excellent in mechanical properties and resistance to impact, chemicals and moisture. Said composition has a variety of uses as a coating material for rust prevention, flame resistance, flame retardants and the like; as electrical insulating varnish; as adhesive; in laminates to be used for furnitures, building materials, sheathing materials and electrical insulating materials; and in a variety of mouldings.

In a preferred embodiment, the solution is coated on a suitable support, e.g., glass, the solvent is flashed off at 90 °C to 250 °C, and the material advanced to a "B"-staged prepreg. The prepregs are then stacked and cured into a laminate. The laminate is heated to 140-240 °C, preferably at 170-200 °C and post-cured by heating at 180-300 °C, preferably at 200-275 °C.

Alternatively, the polymerization or curing of cyanate ester-propargyl ether aromatic compounds can be carried out by first melting the compound and then raising the temperature to a range of from 50 to 240 °C,

preferably 150 °C to 200 °C and then heating at 220 °C.

The polymerization of the cyanate group usually can be carried out more efficiently with the aid of conventional activators, initiators or catalysts konwn in the cyanate polymerization art. These polymerization promoting agents representatively include but are not limited to Lewis acids, such as stanneous chloride, aluminum chloride, boron trifluoride, ferric chloride, titanium chloride, and zinc chloride; protonic acids, such as hydrochloric and other mineral acids; salts of weak acids, such as sodium acetate, sodium cyanide, sodium cyanate, potassium thiocyanate, sodium bicarbonate, sodium boronate, and phenylmercuric acetate; and bases, such as sodium methoxide, sodium hydroxide, pyridine and triethylamine; imidazoles, such as 2-methylimidazole, 2-undecylimidazole, 2-heptadecylimidazole, 2-phenylimidazole, 2-ethyl-4-methylimidazole, 1-benzyl-2-methylimidazole, 1-propyl-2-methylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 1-guanaminoethyl-2-methylimidazole and addition product of an imidazole and trimellitic acid; tertiary amines, such as N,N-dimethyl benzylamine, N,N-dimethylaniline, N,N-dimethyltoluidine, N,N-dimethyl-p-anisidine, p-halogeno-N,N-dimethylaniline, 2-N-ethylanilino ethanol, tri-n-butylamine, pyridine, quinoline, N-methylmorpholine, triethanolamine, triethylamine, triethylenediamine, N ,. N ,N′ ,N′ tetramethylbutanediamine, N-methylpiperidine; phenols, such as phenol, cresol, xylenol, resorcinol, and phloroglucin; organic metal salts, such as lead naphthenate, lead stearate, zinc naphthenate, zinc octoate, nickel octoate, tin oleate, dibutyl tin maleate, manganese naphthenate, cobalt naphthenate; peroxides, such as benzoyl peroxide, lauroyl peroxide, octanoyl peroxide, acetyl peroxide, para-chlorobenzoyl peroxide and di-t-butyl diperphthalate; acid anhydrides, such as maleic anhydride, phthalic anhydride, fumaric anhydride, pyromellitic anhydride, trimellitic anhydride, hexahydrophthalic anhydride, hexahydropyromellitic anhydride and hexahydrotrimellitic anhydride; azo compounds, such as azoisobutylonitrile, 2,2′-azobispropane, m, m′-azoxystyrene, hydrozones, and mixtures thereof. Catalysts also include non-ionic coordination compounds, such as cobalt, iron, zinc, and copper acetylacetonates or conventional Group VIII metal addition polymerization catalysts, such as nickel or platinum complexes including nickel acetylacetonate, bis-(triphenylphosphine) platinum chloride II and the like. The amount of catalyst used can vary according to the type of ctalyst, the compound of Formula 10 and the reaction conditions, and generally will be of from 0.05 to 5 mole percent, preferably of from 0.05 to 0.5 mole percent. Zinc II compounds, such as the octoate, are preferred. The curing can also be affected by other conventional means such as ionizing radiation or irradiation of light (UV rays).

The various cyanate ester-propargyl ether aromatic compounds of this invention [novel compound and (co)polymers] are crystalline or amorphous solids which melt to flowable liquids at convenient working temperatures. They are soluble in a variety of organic solvents such as methylene chloride, chloroform, benzene, toluene, chlorobenzene, acetone, methyl ethyl ketone, ethyl benzoate, ethyl cellulose and dimethylformamide. They provide excellent bases for solvent-diluted coatings such as brush, spray, and dip coatings, particularly in the case of the higher molecular weight prepolymer type of cyanate ester-propargyl ether. The cyanate ester-propargyl ether aromatic compounds can be used as one-component cured-in-place resins which show good thermal stability along with resistance to solvents and corrosive chemicals such as dilute acids, and basis. The fabrications of shaped articles from these resins is greatly facilitated in that no volatile by-products are liberated during the curing process.

The cyanate ester-propargyl ether aromatic compounds of this invention have relatively high molecular weight and consequently have low volatility and therefore less toxicity and can be conveniently handled at elevated temperatures. Resistance to thermal degradation caused by aging at high temperatures is improved because of a reduced concentration of the relatively less stable cyanurate rings.

The cyanate ester-propargyl ether aromatic compounds of the invention can also be used in the form of a prepolymer. The prepolymer is prepared by polymerizing the polyfunctional cyanate monomer group in the presence of a conventional catalyst, for example, a mineral acid, a Lewis acid, a salt such a sodium carbonate or lithium chloride, or a phosphoric acid ester such as tributyl phosphine. The prepolymer contains a triazine ring generally in the molecule as a result of the trimerization of the cyano group of the cyanate ester. Preferred prepolymers are those having an average molecular weight of at least 400, especially up to 6000.

The cyanate ester-propargyl ether aromatic compound of the invention can be used in the form of a mixture of monomer and the prepolymer. A mixture of a prepolymer of the cyanate ester-propargyl ether monomer and an amine can also be used and is particularly useful as an intermediate to blends with maleimides as herein later described.

As already stated, an amine can be incorporated in the form of a prepolymer of the cyanate ester-propargyl ether aromatic compound and the amine. Any of the diamines or polyamines mentioned hereinbefore can be used.

The present invention is also directed to a curable resin composition comprising:
- a propargyl ether-cyanate ester aromatic monomer described above
a compound (a2) as described above.

Such compositions are also useful for composites, which are thermally stable and curable without a catalyst to give high glass transition temperatures.

Suitable compounds (a2) include any of the compounds (a2) mentioned before.

Generally speaking all the curable resin compositions of invention presented sofar can be used in the solution form as adhesives, paint vehicles, moulding materials to be impregnated in substrates, or laminating materials. In this case, the concentration of the resin solid in the solution is determined so that the optimum operability can be obtained according to the desired utility.

The resin compositions of this invention can also be used for various purposes in the form of dried powder, pellets, resin-impregnated product or compound. For example, compositions with the individual components uniformly mixed can be obtained by uniformly mixing the resin components in solution, and then removing the solvents from the homogeneous solution at reduced pressure or at an elevated temperature. Alternatively, solid components are kneaded at room temperature or at an elevated temperature to form a homogenized resin composition.

A variety of additives may be added to the curable composition to impart specific properties provided that they do not impair the essential properties of the resulting resin. Examples of the additives include natural or synthetic resins, fibrous reinforce ment, fillers, pigments, dyestuffs, thickening agents, wetting agents, lubricants and flame-retardants.

The resin compositions of this invention may also contain a white pigment such a titanium dioxide, a colored pigment such as yellow lead, carbon black, iron black, molybdenum red, prussian blue, ultramarine, cadmium yellow or cadmium red, and other various organic and inorganic dyes and pigments in order to color the compositions. In addition to the above colored pigments, the resin compositions can also contain a rust-proofing pigment such as zinc chromate, red lead, red iron oxide, zinc flower or strontium chromate, an anti-sag agent such as aluminum stearate, a dispersing agent, a thickener, a coat modifier, a body pigment or a fire retardant, which are known additives for paints.

The compositions according to the invention are useful as sheet moulding compositions, in structural applications such as automobile parts, coatings and electrical laminates. For such electrical applications, the properties of flame retardants and high Tg are important.

The present invention is further illustrated by the following examples which are not intended to be construed as limitations upon the invention.

The coefficient of thermal expansion (CTE) was measured by Dynamical Mechanical Analysis.

The 5% weight loss temperature was determined by Thermal Mechanical analysis.

The Tg (DSC) is the Tg as measured with a Differential Scanning Calorimeter.

The Tg (DMA) is the maximum in the damping peak measured by Dynamical Mechanical Analysis.

The Tan Delta Max is a DMA-spectrum in which the minimum of the modulus is determined.

Experiment 1

Compositions comprising an epoxy resin compound and a propargyl aromatic ether.

a) A varnish composition was prepared by mixing components as presented in Table 1.

TABLE 1

| Composition | 1 | | 2 | | 3 | | 4 | |
|---|---|---|---|---|---|---|---|---|
| component | amount (g) | order of addition | amount (g) | order of addition | amount (g) | order of addition | amount (g) | order of addition |
| Epoxy resin 1123-4-80 (80% brominated epoxy resin in acetone) | 7 | 4 | 7.1 | 4 | 3.56 | 1 | 42.6 | 4 |
| BPA-dipropargylether | 4 | 3 | 4 | 3 | 1.00 | 2 | 12.0 | 3 |
| 2-methylimidazole (10% in propyleneglycol methyl ether) | 0.96 | 5 | 0.35 | 5 | 0.51 | 3 | 4.62 | 5 |
| dimethylformamide | 2.2 | 1 | 2.8 | 1 | - | - | 9.0 | 1 |
| acetone | 2.5 | 2 | 2.5 | 2 | - | - | 9.1 | 2 |
| gelling time(s) at T (°C) | 167 at 170 | | 500 at 170 | | 114 at 170 | | 147 at 171 | |
| | | | | | | | 110 at 171* | |

* three days old compositions

The gelling time at a specified temperature is also presented in table 1. Compositions 1 and 2 were tacky at room temperature. The gels formed from composition 3 were red brown in colour and solid at room temperature.

b) Prepregs were made by coating a glass cloth with the varnish composition 4 and putting the wet-coated glass cloth in a forced draft oven at 163 °C for 4 minutes. The prepreg gel time was 43 seconds. Laminates were made by stacking eight sheets of prepregs pressing the stack at 194 °C and 1.38 x $10^3$ kPa for 1.0 hour and then post curing for three hours at 220 °C followed by 0.5 hour at 250 °C.

The laminate had the following properties

- Tg (DMA): 160 °C
- Coefficient of thermal expansion (CTE):

| Temperature range, °C | Average CTE in ppm/°C |
|---|---|
| 25-175 | 18 |
| 175-275 | 168 |
| 40-220 | 53 |

The unique combination of properties of the above composition when formed into laminates and cured makes the compositions of the invention useful as matrix resins for fiber reinforced compoistes and moulding compounds particularly in the electronic and electrical laminating applications.

Experiment 2

Compositions comprising a maleimide monomer and a propargyl aromatic ether

a) In order to demonstrate the ability to cure blends containing the bismaleimide of methylene dianiline resin and the dipropargyl ether of bisphenol-A (BPA), two grams of each component were placed on a hot plate in a container with a stirring bar.

The mixture was raised to the melting point of the BPA-propargyl ether and the temperature maintained until a homogeneous mixture was obtained. The mixture was then placed in an oven at 200 °C for 2.0 hours. Surprisingly the mixture showed 97.5% retention of its weight. Under similar conditions a sample containing only BPA-dipropargyl ether lost up to 50 % of its weight. The partially cured mixture was then examined by use of differential scanning calorimeter (DSC) and was found to have and additional exotherm at 265 °C.

Final cure was effected by a 20 minute hold at 275° in the DSC. The Tg was found to be 281 °C.

b) A varnish solution was prepared containing a 75:25 weigth ratio blend of bismaleimide of methylene dianiline resin (20 g in 13.3 ml of dimethylformamide (DMF)) and BPA-dipropargyl ether (6.67 grams in 4.44 ml acetone) in acetone (4.45 ml of additional solvent to that from the resin solutions). The varnish was catalyzed by 1 gram of a 10 % solution of 2-methylimidazole in methyloxitol. The varnish gel time was 168 seconds.

The varnish solution was coated on a glass cloth and advanced to a so called "B', stage by exposure of 3.25 minutes in a forced air oven at 163 °C. The "B" staged prepregs were cut and stacked in to 8 layers and pressed into laminates for 1 hour at 180 °C and 172 kPa pressure. The laminate was post cured for 4.0 hours at 250 °C and 2 hours at 300 °C.

The cured laminate had the following properties:

- 5 % weight loss temperature: 420 °C
- Tg(DMA): 324.6 °C.
- Coefficient of thermal expansion (CTE):

| Temperature range, °C | Average CTE in ppm/°C |
|---|---|
| 50-250 | 46.6 |

Experiment 3

Compositions comprising the cyanate ester of BPA and the propargyl ether of BPA

a) Preparation of a dicyanate ester of BPA.

A five liter four neck flask equipped with a stirrer thermocouple and addition funnel was charged with 314.5 g cyanogenbromide followed by 985.8 g of isopropyl alcohol. The mixture was chilled to a temperature in the range of from -50 °C to 3 °C and a mixture of 456 g of bisphenol A and 420.16 g of triethylamine dissolved in 2135.7 g of isopropyl alcohol was added, with stirring over 120 minutes while maintaining the reaction temperature in the range of from -5 °C to 3 °C. The mixture was stirred overnight. The desired dicyanate ester product and triethylamine hydrobromide salt crystallized out of the solution together. The resulting slurry was filtered using a vacuum Buchner funnel. The filtered solids were allowed to warm to room temperature and then washed with deionized water until triethylamine hydrobromide was removed from the desired solid dicyanate ester product. The solids were dried in a vacuum oven at 66.7 °C to give 270 g of the desired dicyanate ester of bisphenol A, having a melting point of about 55 °C.

b) Preparation of dipropargyl ether of bisphenol A

A mixture of 300 g of bisphenol A in 1039.4 g of isopropyl alcohol (IPA) was mixed with a mixture of 112.8 of 97% sodium hydroxide in 942.1 of deionized water and heated to 75 °C to obtain a clear solution. To this solution was added over 0.5 hour 500.1 g of 98% propargyl chloride while heating to 83.3-86.1 °C (just below reflux). The pH of the reaction mixture was maintained by adding a sufficient number of 5 ml increments of a solution of 10% sodium hydroxide in deionized water to maintain the pH of the reaction mixture at greater or equal to 12.

During the reaction, the desired propargyl ether crystallized out of solution. After six hours of reaction, the product was recovered by allowing the reaction mixture (slurry) to cool to room temperature, and vacuum filtering through a Buchner funnel. The product, the retained solids, were washed with water and filtered. This washing was repeated until the pH of the water after washing was equal to the pH before washing (usually 5.5-7.0), after washing the crystals were washed with IPA to remove any residual propargyl chloride and water. The crystals were dried under vacuum at 40-50 °C to produce 300 g of the final crystallized dipropargyl ether of bisphenol A having a melting point of 86.8 °C.

c) Dipropargyll ether of bisphenol A blends with dicyanate ester of bisphenol A and laminates therefrom.

Varnish formulations were prepared by mixing together the dipropargyl ether of bisphenol A with dicyanate ester of bisphenol A (50-50 %w) in acetone and dimethylformamide. A sufficient amount of a 10% solution of zinc octoate in acetone was added to catalyze the curing reaction. The resulting formulation was applied to coat glass cloth. The wet, coated glass cloth was dried in an oven to give a dried and partially reacted (advanced) resin coating, which was dry to the touch. Several sheets of the prepreg were then stacked and pressed with copper foil under heat and pressure to form copper clad electrical laminates.

Table 2 lists processing conditions and properties of the prepreg and the laminate.

TABLE 2

VARNISH FORMULATION OF THE DIPROPARGYLETHER OF BPA AND THE DICYANATE ESTER OF BPA AND PROPERTIES THEREOF

| Varnish formulation | grams |
|---|---|
| DPEBPA(1) | 18 |
| DCyBPA(2) | 18 |
| acetone | 10.8 |
| dimethylformamide | 4.63 |
| zinc octoate (8 %w in acetone) | 0.23 |
| gel time (seconds at 171 °C) | 82 |
| **Prepreg** | |
| Processing conditions: | |
| oven time (minutes) | 4.0 |
| oven temperature (°C) | 163 |
| resin content (%w) | 41 |
| **Lamination** | |
| Laminate construction: Size (cm x cm):10.2x10.2; No. of plies: 8 | |
| Processing conditions: | |
| heat-up rate (°C/minutes) | 41.7-211/8 |
| temperature (°C) | 211 |
| time at temperature (hours) | 1.5 |
| pressure (kPa) | $1.72.10^3$ |
| post cure at temperature (°C/hours) | 122/3 and 139/1 |
| **Glass Transition** | |
| Tg (DSC) (°C) | 190.56 |
| Tg (DMA) (°C) | 244 |
| **Coefficient of Thermal Expansion (CTE)** | |
| Expansion (ppm/°C) | |
| Below the Tg (DSC) | 46.5 |
| Average, 50-250 °C | 91.5 |
| **TGA** | |
| 5% weight loss temperature (°C) | 390.48 |
| residual % weight at 500 °C | 85.17% |
| weight % water after 24 hours | 0.5 |

(1) Dipropargyl ether of bisphenol A

(2) Dicyanate (cyanate ester) of bisphenol A

Experiment 4

Preparation of cyanate ester-propargyl ethers, and a composition comprising a cyanate ester-propargyl ether of BPA and a bismaleimide.

a) Preparation of cyanate ester-propargyl ether derivatives of an o-cresylic novolac resin.

i)

Step 1: Into a 5000 ml four-neck flask equipped with a stirrer, reflux condenser, and thermocouple was added 2700 ml of toluene and 625 g of o-cresylic novolac resin (mol wt. of 625 with average hydroxyl functionality of 5). After the o-cresylic novolac was completely dissolved, 212 g of a 50% solution of sodium hydroxide in water was slowly added over 30 minutes at room temperature. After the hydroxide addition had been completed, the temperature was raised to 60 °C and 447 g of propargyl chloride was added slowly over 1.5 hours from a dropping funnel. After the addition had been completed, the temperature was increased to reflux (78 °C) and maintained for 3 hours. This procedure converted half of the hydroxyl groups to propargyl ether groups.

Step 2: The second part of the procedure converted the remainder of the hydroxyl groups into cyanate ester groups. Into a four-neck 5000 ml round-bottom flask equipped with a reflux condenser, dropping funnel, thermocouple, and stirring rod, was added 212 g of cyanogen bromide and 2700 ml of toluene. The temperature of the solution was reduced to 0 °C with the aid of a salt ice bath. In a separate container, 529 g of the 50% propargyl ether prepared in step one above and 183 g of triethylamine was reacted and cooled to 0 °C. The 50% propargyl ether/triethylamine solution was transferred to the dropping funnel and slowly added to the cyanogen bromide-toluene solution over a 3-hour time period. Stirring was continued overnight with the temperature gradually increasing to room temperature. The triethylamine hydrobromide salt was removed by filtration and the filtrate washed several times with deionized water. The toluene was removed by vacuum distillation yielding 448 g of propargyl ether/cyanate ester product (I).

The above procedure was essentially repeated except that in the first step 25% of the hydroxyl groups were converted and in the second step the remaining hydroxyl groups were converted into cyanate ester groups to give product (II).

The above procedure was essentially repeated except that in the first step 75% of the hydroxyl groups were converted and in the second step the remainder of the hydroxyl groups to give product (III).

The products I, II and III were found to be highly soluble in a number of low boiling solvent such as isopropyl alcohol, acetone and methyl ethyl ketone which conform well to varnish preparation for electrical prepregging. The following varnish formulation of the propargyl ether/cyanate product I is typical of such a formulation as shown in Table 3.

TABLE 3

| VARNISH FORMULATION AND PROPERTIES OF PRODUCT I | |
|---|---|
| Varnish formulation | grams |
| 50% propargyl ether/50% cyanate ester (I) | 82 |
| acetone | 35 |
| zinc octoate (8 %w in acetone) | 0.08 |
| Properties | |
| gel time (seconds at 171 °C) | 104 |
| prepreg time (minutes at 163 °C) | 2.4 |
| weight % resin on prepreg | 50.5 |
| Laminate Properties | |
| weight % resin on laminate | 41 |
| dielectric constant, 1 mhz | 3.7 |
| dissipation factor | 0.007 |
| 5% weight lost temp, (°C) | 427 |
| Tg (DMA), (°C) | 342 |
| tan delta max, (°C) | 352 |

Similar varnish compositions as shown in table 3 using the products II and III were prepared.

In table 4 the thermal properties of varnishes based on compounds I, II and III, as indicated by the Tan Delta Max as a function of the cyanate ester-propargyl ether group, are presented.

TABLE 4

| LOW DIELECTRIC VARNISHES OF A PROPARGYL ETHER/CYANATE AROMATIC COMPOUND | |
|---|---|
| Product | Tan Delta Max (°C) |
| Comparative Varnish* | 275 |
| III | 325 |
| I | 351.5 |
| II | 292 |

* all the hydroxyl groups of the o-cresylic novolac resin have been converted in cyanate ester groups.

(ii) a similar process and using the same amounts of reaction components as in case of i) was carried out except for the following differences:
step 1: The o-cresylic novolac resin and toluene were charged into the reaction vessel and dissolved with stirring. An aqueous solution of sodium hydroxide was added, and the resulting solution heated to 60 °C in sufficient base to convert half the OH groups to the sodium salt. Propargyl chloride was slowly added over one hour. The resulting mixture was heated to reflux and held for three hours (75-79 °C) and phase separated. The brine phase was removed. The resulting material was washed with hot water, vacuum distilled to remove the toluene and the intermediate product collected.

Cyanogen bromide and toluene was charged into a separate reaction flask and cooled to 5 °C. Triethylamine was added to the toluene solution containing the propargyl ether from the first step and cooled to 5 °C and the resulting mixture introduced into the reaction flask over two hours. After addition

was completed, the mixture was allowed to stir overnight. The triethylamine hydrobromide salt was removed by filtration and the organic phase was washed several times and the brine removed. The resulting mixture was vacuum distilled, keeping the temperature below 60 °C. The product was made into the varnishes as set forth in Table 5 and into laminates and castings having the properties set forth in Table 6. It should be noted that the dielectric properties are increased by the presence of ionic impurities such as NaBr.

TABLE 5

| VARNISH FORMULATION AND PROPERTIES | | | | |
|---|---|---|---|---|
| composition | 1 | 2 | 3 | 4 |
| - cyanate ester-propargyl ether of BPA | 30.1 | 37.3 | 81.9 | 35 |
| - zinc octoate (8 %w in acetone) | 0.03 | 0.06 | 0.08 | 0.021 |
| - dimethylketone | 12.8 | 16.0 | 35.2 | 15 |
| - gel time (seconds at 171 °C) | 64 | 182 | 104 | 167 |
| - prepreg time (seconds at 171 °C) | 1.5 | 3.75 | 2.5 | 3.25 |
| - weight % resin on prepreg | 50.2 | 49.3 | 50.6 | 50.5 |

TABLE 6

| LAMINATE AND CASTING PROPERTIES | | | | |
|---|---|---|---|---|
| composition | 1* | 2** | 3** | 4* |
| properties | | | | |
| % resin on laminate | 35 | 30.0 | 41.0 | 38.2 |
| - dielectric constant (1 mhz) | 3.46 | 3.66 | 3.77 | 4.40 |
| - Tg (DMA) | 323.9 | 348.3 | 342.8 | 343.3 |
| - tan delta max (°C) | 340.3 | 352.4 | 351.5 | 353.5 |
| - 5% weight loss temp. (°C) | 385.45 | 435.0 | -- | 439.3 |
| - residual % weight at 500 °C | 81.42 | 88.73 | -- | 88.82 |
| - coefficient of thermal expansion (ppm/°C) | 62.6 | -- | -- | 18.5/26.0 |
| - residual NaBr (ppm Br) | 36.0 | 56.0 | 121.0 | 190.0 |
| - $H_2O$ (% weight) | 0.27 | 0.22 | 0.29 | 0.15 |
| - phenolic OH | -- | 0.0078/0.017 | 0.0003 | -- |

* 1 and 4 cured for 1 h at 180 °C at 344.8 kPa followed by 2 h at 220 °C at 344.8 kPa followed by post curing for 1 h at 250 °C in oven.

** 2 and 3 cured for 1 h at 180 °C at 344.8 kPa followed by 2 h at 220 °C at 344.8 kPa followed by post curing for 2 h at 250 °C in oven.

b) In order to demonstrate the ability to cure blends containing propargyl ether-cyanate ester (I) with bismaleimide of methylene diamine, 20 g of each component were placed in a beaker with a stirring bar on a hot plate. The temperature was increased to the softening point of the propargyl ether-cyanate ester (I) at which time the mixture became homogeneous. The mixture was placed in an oven at 200 °C for 2 hours and 1 hour at 275 °C. The sample was found to be completely cured measured by DSC. Furthermore, the cured mixture was stable up to 375 °C without any indications of thermal decomposition (by DSC). By thermagravimetric analyses, the 5% weight loss temperature was 392 °C.

Experiment 5

Preparation of the dipropargyl ether compounds

a) Runs 1-7 and comparative run A - Preparation of dipropargyl ether of bisphenol A.

The dipropargyl ether of BPA was prepared by treating BPA with propargyl chloride in a ratio of 1:5 in the presence of sodium hydroxide (molar ratio NaOH:BPA = 2.08) and a reaction medium comprising (1) ethanol, (2) isopropyl alcohol (IPA) or (3) isopropyl alcohol (molar ratio IPA:BPA = 13.2) and water (ratio $H_2O$:BPA = 40) at a temperature of 83.3-86.1 °C. The reaction product was cooled to room temperature, where the product crystallized out of solution. This product was washed twice with isopropyl alcohol to remove propargyl chloride and then washed several times with water (until the pH of the source water, usually 6-6.5, equaled the pH of the wash water). The product crystals were then dried . Similar runs were conducted using other ratios of reactants. Results of these runs are set out in table 7.

TABLE 7

PREPARATION OF BISPHENOL A DIPROPARGYL ETHERS

| run | 1 | 2 | 3 | 4 | 5 | 6 | 7 | A |
|---|---|---|---|---|---|---|---|---|
| bisphenol A (BPA) | | | | | | | | |
| grams | 228.0 | 228.0 | 228.0 | 176.7 | 300.0 | 300.0 | 300.0 | 232.3 |
| equivalents OH | 2.00 | 2.00 | 2.00 | 1.55 | 2.63 | 2.63 | 2.63 | 2.04 |
| Propargyl Chloride (g) | | | | | | | | |
| initial addition | 223.6 | 223.8 | 372.6 | 173.6 | 490.1 | 490.1 | 490.1 | 167.1 |
| total (1) | 293.6 | 423.8 | 447.2 | 191.0 | 490.1 | 490.1 | 490.1 | 200.5 |
| Molar ratio of propargyl chloride:BPA | | | | | | | | |
| initial | 1.50 | 1.50 | 2.50 | 1.50 | 2.50 | 2.50 | 2.50 | 1.10 |
| total (1) | 1.97 | 2.84 | 3.00 | 1.65 | 2.50 | 2.50 | 2.50 | 1.32 |
| Solvents (g) | | | | | | | | |
| Ethanol | | | | | | | | |
| initial | 800.0 | 800.0 | 800.0 | -- | -- | -- | -- | -- |
| with additional catalyst | 80.0 | 320.0 | 187.0 | -- | -- | -- | -- | -- |
| Water | | | | | | | | |
| initial | -- | -- | -- | 423.7 | 942.1 | 942.1 | 942.1 | 1019.0 |
| with additional catalyst | -- | -- | -- | -- | -- | 15.6 | 15.6 | -- |
| Isopropylalcohol (IPA) (2) | -- | -- | -- | 606.9 | 1039.4 | 1039.4 | 1039.4 | -- |

TABLE 7 (Cont'd)

| run | 1 | 2 | 3 | 4 | 5 | 6 | 7 | A |
|---|---|---|---|---|---|---|---|---|
| Catalyst | KOH | KOH | KOH | NaOH | NaOH | NaOH | NaOH | NaOH |
| initial addition (PURE) | 117.6 | 123.2 | 123.2 | 65.6 | 109.4 | 109.4 | 109.4 | 81.6 |
| total (3) | 143.8 | 203.2 | 151.1 | 68.9 | 114.9 | 111.1 | 111.1 | 81.6 |
| Molar ratio of catalyst:phenolic compound | | | | | | | | |
| initial | 1.05 | 1.1 | 1.1 | 1.06 | 1.04 | 1.04 | 1.04 | 1.00 |
| total (3) | 1.28 | 1.81 | 1.35 | 1.11 | 1.09 | 1.06 | 1.06 | 1.00 |
| Processing Information: | | | | | | | | |
| Ph controlled? | No | No | No | Yes >=11 | Yes >=10 | Yes >=12 | Yes >=12 | No |
| Intermediate salt removal? | Yes | Yes | No | N/A | N/A | N/A | N/A | N/A |
| Time at reaction temp. (h) | 26 | 42 | 26 | 22 | 14 | 5.7 | 5.75 | 28.5 |
| yield (% of theoretical) | 62.93 | (4) | 83.8 crude | 85.17 | 77.75 | 81.05 | 82.48 | 49.60 |

A is a comparative run

(1) In attempts to further advance the production of porpargyl ether, more propargyl chloride was added during the synthesis. This later proved not to be necessary.

(2) In all of these reactions with IPA and water, the propargyl chloride was added over 0.5 hour at 75 °C. The time at temperature begins after addition, when the temperature was raised to the reaction temperature 83.3-86.1 °C.

(3) In attempts to further advance the production of propargyl ether, more catalyst was added during the reaction. During later synthesis, this proved to be the preferred approach to control pH. Additional catalyst was added in a water solution.

(4) Not determined. Did not precipitate.

As the reaction proceeded, the reaction pH approached neutrality (pH = 14 at sta rt, decreasing to < pH = 10) before all the BPA starting material was converted to dipropargyl ether. However, if additional increments of 0.04 mol/mol NaOH/BPA were added to keep the pH above 11.5, the reaction continued to completion; a reaction pH of greater than or equal to 13 forced the reaction to proceed most rapidly. When the pH was less than 11.5, the reaction began to reverse over time.

The bisphenol A dipropargyl ether precipitated during the reaction, further driving the reaction to completion.

Note that in this process of the invention, the heat sensitive (product reaction) propargyl ethers are never exposed to temperatures above 86.1 °C.

b) Runs 8-9 - Preparation of the dipropargy ether of tetrabromobisphenol A and the dipropargyl ether of bishydroxycumylbenzene.

In similar runs to those set out above, the dipropargyl ether of tetrabromo-bisphenol A and of bishydroxycumylbenzene were prepared. Results of these runs are set out in table 8.

TABLE 8

PREPARATION OF DIPROPARGYL ETHERS OF TBBPA[1] AND BHCB[2]

| run | 8 | 9 |
|---|---|---|
| Phenolic compound | TBBPA | BHCB |
| grams | 611.0 | 200.0 |
| equivalents OH | 2.25 | 1.16 |
| Propargyl Chloride (g) | | |
| Initial addition | 418.4 | 168.0 |
| Total[3] | 418.4 | 168.0 |
| Molar ratio of Propargyl chloride: phenolic compound | | |
| initial | 2.50 | 1.95 |
| total[3] | 2.50 | 1.95 |
| Solvents (g) | | |
| Water | | |
| initial | 972.7 | 2050.0 |
| with additional catalyst | – | – |
| Isopropyl alcohol[4] | 887.3 | 669.0 |
| Catalyst | NaOH | NaOH |
| initial addition (PURE) | 99.0 | 48.1 |
| total[5] | 109.2 | 57.8 |
| Molar ratio of Catalyst:Phenolic compound | | |
| initial | 1.10 | 1.04 |
| total | 1.22 | 1.25 |

| Processing Information: | | |
|---|---|---|
| pH controlled? | Yes >=11 | Yes >=11 |
| Intermediate salt removal? | N/A | N/A |
| Time at reaction temperature, (h) | 11.75 | 26 |
| Yield, (% of theoretical) | 94.53 | 64.15 |

(1) Tetrabromobisphenol A.

(2) Bishydroxycumylbenzene.

(3) In attempts to further advance the production of propargyl ether, more propargyl chloride was added during the synthesis.

(4) In all of these reactions with IPA and water, the propargyl chloride was added over 0.5 hour at 75 °C. The time at temperature begins after addition, when the temperature was raised to the reaction temperature, 83.3-86.1 °C.

(5) In attempts to further advance the production of propargyl ether, more catalyst was added during the reaction.

## Claims

1. A curable resin composition a compound (a) selected from:

(a1) an epoxy compound,

(a2) a maleimide monomer, a prepolymer thereof or a prepolymer of the maleimide monomer and an amine and

(a3) a cyanate aromatic ester monomer a prepolymer thereof or prepolymers of the ester monomer and an amine, and

(b) a propargyl aromatic ether monomer.

2. A composition according to claim 1 wherein (a1) is a bisepoxy compound of formula

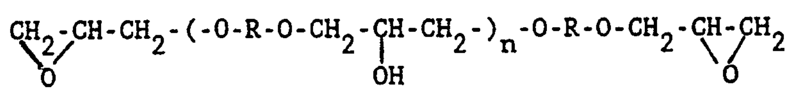

(1)

wherein n is zero to 12 and R is an aromatic group of formula

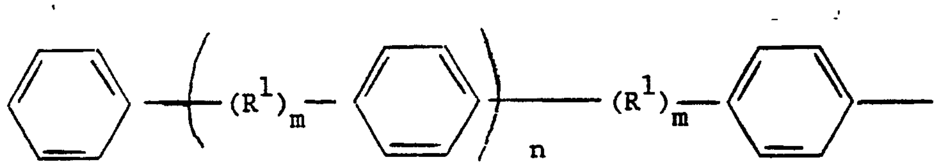

(2)

wherein each m is independently zero or 1; n is zero or 1; and each $R^1$ is independently a divalent aliphatic or aromatic hydrocarbon or aromatic ether group containing up to 14 carbon atoms, an oxygen atom, a sulphur atom, a carbonyl group, a sulphonyl group, a sulphinyl group, an alkyleneoxyalkylene group containing up to 4 carbon atoms in each alkylene group, an imino group,

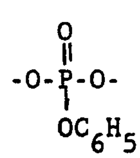

or

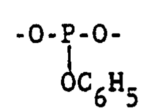

or a group derived from novolac-type resorcinol resins.

3. A composition according to claim 2 wherein (a1) is a reaction product of brominated bisphenol A with an epihalohydrin

4. A composition according to claim 1 wherein (a2) is a bismaleimide of the general formula

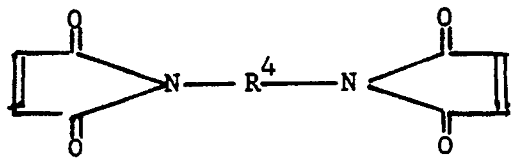

(6)

wherein $R^4$ is a divalent aromatic, aliphatic or cycloaliphatic group containing of from 2 to 40 carbon atoms.

5. A composition according to claim 1 wherein (a3) is a dicyanate ester of bisphenol A or a prepolymer thereof or a prepolymer of the dicyanate ester of bisphenol A and an amine.

6. A composition according to any of the claims 1 to 5 wherein (b) is a compound of the general formula

$R^7$--($OCH_2$-C ≡ CH)$_n$ )9)

wherein n is a number of at least 2 and $R^7$ is an aromatic (aryl) organic group containing from 6 to 100 carbon atoms and wherein the propargyl ether groups are bonded to carbon atoms of the aromatic ring(s) of $R^7$.

7. A composition according to claim 6 wherein $R^7$ is

(i) a residue having a valence of at least 2 and derived from aromatic hydrocarbons containing of from 6 to 16 carbon atoms or

(ii) an aromatic group of the formula 2 according to claim 2.

8. A composition according to claim 7 wherein (b) is the dipropargyl ether of bisphenol A.

9. A composition according to any one of the claims 1 to 8 wherein the weight ratio of component (a) to (b) is in the range of from 70:30 to 30:70.

10. A cured composition comprising a composition of any one of the claims 1 to 9 which has been cured by heating at elevated temperature in the presence of a curing agent.

11. A composition according to claim 10 wherein the curing agent is 2-methylimidazole, copper tetrafluoroborate or zinc octoate.

12. A propargyl aromatic ether monomer (b) as defined in claim 1 having at least one cyanate ester and at least one propargyl ether group each independently directly attached to ring carbon atoms of an aromatic (aryl) organic group which contains of from 6 to 100 carbon atoms.

13. A composition as claimed in claim 12 having the general formula

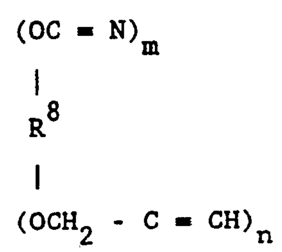

(10)

wherein m is a number of at leat 1, n is a number of at least 1 and $R^8$ is an aromatic (aryl) organic group similar to $R^7$ according to claim 7.

14. A curable resin composition comprising at least one cyanate ester-propargyl ether aromatic compound according to any one of the claims 12 to 13, or a prepolymer thereof or a prepolymer of the cyanate ester-propargyl ether compound with an amine.

15. A curable resin composition according to claim 14 comprising a compound (a2) as claimed in claim 1.

16. A composition according to claim 15 wherein (a2) is a bismaleimide according to the general formula 6 as claimed in claim 4.

17. A process for the preparation of a cyanate ester-propargyl ether aromatic compound according to the formula 10 of claim 13 wich comprises treating

- a diphenol or
- a di- or polyhydric phenol bonded or through a bridging atom or group - or fused to one or more aromatic or cycloaliphatic rings,

with a propargyl halide in an amount less than that equivlant to the hydroxy content of the phenolic material

and then treating the resulting propargyl ether phenolic compound with a cyanogen halide.

18. A process for the preparation of a propargyl ether aromatic monomer as defined in claim 1 which comprises heating a polyhydric phenolic compound with propargyl chloride in the presence of an alkali metal hydroxide or carbonate and a reaction medium comprising a water miscible, protic solvent or a mixture thereof with water.